(19) **Europäisches Patentamt / European Patent Office / Office européen des brevets**

(11) **EP 2 929 322 B1**

(12) **FASCICULE DE BREVET EUROPEEN**

(45) Date de publication et mention
de la délivrance du brevet:
**12.10.2016 Bulletin 2016/41**

(21) Numéro de dépôt: **13815048.7**

(22) Date de dépôt: **04.12.2013**

(51) Int Cl.:
*G01N 21/3504* (2014.01)   *G01N 21/3577* (2014.01)
*G01N 21/27* (2006.01)   *G01N 21/31* (2006.01)

(86) Numéro de dépôt international:
**PCT/FR2013/052941**

(87) Numéro de publication internationale:
**WO 2014/087103 (12.06.2014 Gazette 2014/24)**

(54) **PROCÉDÉ ET DISPOSITIF EMBARQUE D'ANALYSE DE FLUIDE DANS UN MOTEUR THERMIQUE**

BORDVORRICHTUNG UND VERFAHREN ZUM ANALYSIEREN VON EINER FLÜSSIGKEIT IN EINER WÄRMEKRAFTMASCHINE

ONBOARD DEVICE AND METHOD FOR ANALYZING FLUID IN A HEAT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2012 FR 1261758**
**07.12.2012 FR 1261757**

(43) Date de publication de la demande:
**14.10.2015 Bulletin 2015/42**

(73) Titulaire: **SP3H**
**13545 Aix-en-Provence Cedex 4 (FR)**

(72) Inventeurs:
• OBERTI, Sylvain
**13004 Marseille (FR)**
• FOURNEL, Johan
**84440 Robion (FR)**

(74) Mandataire: **de Roquemaurel, Bruno et al**
**OMNIPAT**
**24 Place des Martyrs de la Résistance**
**13100 Aix en Provence (FR)**

(56) Documents cités:

| | |
|---|---|
| WO-A1-2008/129453 | WO-A2-2010/053617 |
| FR-A1- 2 940 447 | US-A1- 2002 179 815 |
| US-A1- 2006 072 319 | |

**Description**

La présente invention concerne l'analyse de fluides par spectrométrie. La présente invention s'applique notamment mais non exclusivement à l'analyse de fluides dans un moteur thermique, et en particulier à l'analyse des hydrocarbures utilisés comme carburant d'un tel moteur. Cette analyse concerne tous les moteurs thermiques, que ce soit ceux utilisés dans les transports terrestres, maritimes et aériens, les moteurs militaires ou les moteurs stationnaires.

Le durcissement des normes environnementales impose aux différents constructeurs ou utilisateurs de moteurs thermiques de rechercher des gains de consommation de carburant et de réduction des émissions polluantes des moteurs. Or il s'avère que certaines caractéristiques du carburant comme sa composition, ont une influence directe sur les performances et le bon fonctionnement des moteurs thermiques. Il s'avère également que certaines de ces caractéristiques sont particulièrement variables en ce qui concerne les carburants à base d'hydrocarbures, notamment en fonction de la provenance du carburant. On estime en effet que certaines caractéristiques comme la composition des carburants à base d'hydrocarbures, peuvent varier de 15 à 40% ou davantage. Or la connaissance de ces caractéristiques permet de déterminer certains paramètres de réglage du moteur afin de réduire la consommation et les émissions polluantes du moteur. De plus, la connaissance qualitative du carburant peut aussi permettre de détecter des pollutions ou anomalies de ce carburant et ainsi de prévenir des dommages sur le moteur ou le véhicule en général.

Il est donc souhaitable d'analyser les caractéristiques comme la composition du carburant alimentant un moteur thermique, et de tenir compte des résultats obtenus pour ajuster des paramètres de fonctionnement du moteur. A cet effet, la spectrométrie proche infrarouge (de 700 à 2500 nm) s'avère adaptée à l'analyse d'hydrocarbures ou de mélanges d'hydrocarbures.

Un capteur basé sur le principe de la spectrométrie notamment en proche infrarouge, comprend généralement un spectromètre et un calculateur de traitement de données permettant de transformer les signaux de sortie bruts (spectre brut) du spectromètre en information qualitative sur le produit à mesurer. Le spectromètre comprend une source de lumière qui couvre au moins une bande de longueurs d'ondes dans laquelle l'analyse doit être effectuée, une cellule de mesure dans laquelle interagissent la lumière produite par la source de lumière et le produit à analyser, et un capteur qui fournit un spectre de la lumière en sortie de la cellule de mesure. Le spectromètre peut mesurer le spectre du produit à analyser en transmission, en réflexion ou en absorbance d'un faisceau de lumière émis par la source de lumière. Un spectromètre est caractérisé principalement par sa gamme d'analyse spectrale (largeur et position du spectre généré), sa finesse d'analyse ou le nombre de points de mesure constituant le spectre généré, et sa précision de mesure.

Les spectromètres actuels, généralement conçus pour les laboratoires ou des applications industrielles complexes et coûteuses, ne sont donc guère adaptés à l'environnement d'un moteur thermique, et en particulier à celui de l'automobile, où ils peuvent subir des vibrations intenses et des températures extrêmes. En plus de leur grande complexité, de leur coût élevé, de leur encombrement relativement important, et de la nécessité de maintenance, ces appareils nécessitent de nombreux composants optiques imposant de sévères contraintes d'alignement, de manipulation et de stockage.

Il est donc souhaitable de réaliser un spectromètre qui soit compatible avec une production en grande série, à un coût adapté à celui des composants automobiles, et qui soit adapté à l'environnement automobile. A cet effet, l'usage d'une ou plusieurs diodes électroluminescentes (LED) comme source de lumière apparaît particulièrement adapté.

Toutefois, il s'avère que le spectre mesuré, qui est caractéristique de la qualité et/ou de la composition du produit à analyser, se trouve affecté par des facteurs extérieurs, comme la température, ainsi que par les caractéristiques du spectre du faisceau lumineux interagissant avec le produit à analyser. Or les diodes LED vieillissent, si bien que leur spectre d'émission varie dans le temps comme exposé dans l'article du LED Journal "LED lighting Life Prediction" de Jianzhong Jiao, Ph.D., Director of Regulations & Emerging Technologies, Osram Opto Semiconductors, Inc., Oct. 2009. En outre, il est connu et démontré que la spectrométrie en proche infrarouge en général est sensible à la température (comme exposé par exemple dans la publication "On-line monitoring of batch cooling crystallization of organic compounds using ATR-FTIR spectroscopy coupled with an advanced calibration method" - Chemometrics and Intelligent Laboratory Systems 96 (2009) 49-58, Zeng-Ping Chen, Julian Morris, Antonia Borissova, Shahid Khan, Tariq Mahmud, Rado Penchev, Kevin J. Roberts). La spectrométrie en proche infrarouge utilisant une source de lumière à base de diode LED s'avère donc particulièrement sensible à la température. En effet, le spectre d'émission d'une diode LED varie de manière significative autant en intensité qu'en décalage de longueur d'onde d'un pic maximum, lorsque la température varie de quelques degrés seulement, comme en atteste le la publication "Temperature Dependence Of LED and its Theoretical Effect on Pulse Oximetry", British Journal of Anaesthesia, 1991, Vol.67, No 5 638-643 (K. J. Reynolds, B.A., M.SC., J. P. De Kock, B.A., L. Tarassenko, M.A., D.PHIL., C.EKG., M.I.E.E. and J. T. B. Moyle, M.B., B.S., I.ENG., M.rNST.M.c, M.I.ELEC.I.E.).

Or un capteur associé à un moteur thermique, embarqué notamment dans un véhicule doit pouvoir fonctionner dans une gamme de température très large (selon l'application, les standards actuels imposent une gamme de température allant de -40°C jusqu'à +105°C, voire jusqu'à +150°C). Par ailleurs, les capteurs embarqués sont censés garantir une longue durée de vie (en fonction de l'application, les standards actuels imposent quelques milliers d'heures à plusieurs dizaines de milliers d'heures). Il est donc crucial pour assurer le bon fonctionnement du spectromètre de pouvoir gérer en temps réel l'influence de la température et du vieillissement de la source de lumière pour assurer une détermination qualitative du produit à analyser qui soit précise et robuste.

Il est donc également souhaitable de réaliser un spectromètre présentant un signal spectral stable, et un rapport signal/bruit le plus constant possible, et ceci dans une large plage de variation de la température ambiante et sur une longue durée de fonctionnement.

Des modes de réalisation concernent un procédé de commande d'un spectromètre d'analyse d'un produit, le spectromètre comprenant une source de lumière comportant plusieurs diodes électroluminescentes ayant des spectres d'émission respectifs couvrant en combinaison une bande de longueurs d'onde d'analyse, le procédé comprenant des étapes consistant à : fournir un courant d'alimentation à au moins une des diodes électroluminescentes pour l'allumer, et mesurer une intensité lumineuse émise par la source de lumière en mesurant un courant à une borne d'au moins une autre des diodes électroluminescentes maintenue éteinte, déterminer en fonction de chaque mesure d'intensité lumineuse, une valeur de consigne du courant d'alimentation de chaque diode allumée, et réguler le courant d'alimentation de chaque diode allumée pour qu'il corresponde à la valeur de consigne.

Selon un mode de réalisation, le procédé comprend des étapes d'allumage successif de groupes d'au moins une diode électroluminescente, les diodes d'un groupe ayant des spectres d'émission sensiblement identiques, tandis que d'autres diodes électroluminescentes sont maintenues éteintes, de mesure d'une intensité lumineuse par chacune des autres diodes électroluminescentes maintenues éteintes, et d'ajustement en fonction de chaque mesure d'intensité lumineuse obtenue, de la valeur de consigne de courant d'alimentation de la diode allumée.

Selon un mode de réalisation, le procédé comprend des étapes consistant à : déterminer en fonction des mesures d'intensité lumineuse une valeur de durée d'intégration de cellules photosensibles d'un capteur du spectromètre, disposées sur un trajet d'un faisceau lumineux émis par la source de lumière et ayant interagi avec un produit à analyser, et si la valeur de durée d'intégration et/ou la valeur de consigne de courant d'alimentation de chaque diode allumée est comprise entre des valeurs de seuil, fournir à chaque diode allumée un courant d'alimentation régulé en fonction de la valeur du courant de consigne d'alimentation, ajuster la durée d'intégration de chaque cellule photosensible à la valeur déterminée de durée d'intégration, et acquérir au moyen de chaque cellule du capteur des mesures d'intensité lumineuse permettant de former un spectre.

Selon un mode de réalisation, de nouvelles valeurs de consigne de courant d'alimentation de chaque diode allumée et/ou de durée d'intégration de chaque cellule sont déterminées et un courant d'alimentation correspondant à la valeur déterminée de consigne de courant d'alimentation est fourni à chaque diode électroluminescente allumée, tant que la valeur déterminée de durée d'intégration n'est pas comprise entre les valeurs de seuil.

Selon un mode de réalisation, la consigne de courant d'alimentation de chaque diode électroluminescente allumée est ajustée aussi en fonction d'une mesure d'intensité lumineuse fournie par une photodiode de la source de lumière, et/ou d'une mesure de la température de la source de lumière, et/ou une mesure d'intensité ou de tension d'alimentation de chaque diode allumée.

Selon un mode de réalisation, le procédé comprend des étapes de test d'autodiagnostic comprenant au moins l'une des comparaisons suivantes : des comparaisons pour déterminer si les mesures d'intensité lumineuse, et/ou des mesures de courant d'alimentation fourni à la diode allumée, et/ou des mesures de température de la source lumineuse sont cohérentes entre elles et avec chaque valeur de consigne de courant d'alimentation de diode électroluminescente allumée, des comparaisons de la valeur de consigne de courant d'alimentation fourni à chaque diode électroluminescente allumée à des valeurs minimum et maximum, et si l'une des comparaisons révèle un défaut, le spectromètre est passé dans un mode de fonctionnement dégradé ou de défaut.

Selon un mode de réalisation, le procédé comprend une étape de correction des mesures d'intensité lumineuse tenant compte d'un écart de la température du produit à analyser et/ou de la température du capteur avec une température de référence, de manière à obtenir des mesures d'intensité lumineuse corrigées résultant de mesures effectuées à la température de référence, les mesures corrigées formant un spectre corrigé).

Selon un mode de réalisation, le procédé comprend des étapes d'obtention d'un spectre corrigé pour chaque diode électroluminescente, et de sommation des spectres corrigés obtenus en appliquant des coefficients de pondération, pour obtenir un spectre résultant), et éventuellement de calcul d'une moyenne de plusieurs des spectres résultants le nombre de spectres moyennés pouvant dépendre d'un mode de fonctionnement, normal ou dégradé, du spectromètre.

Selon un mode de réalisation, le procédé comporte une calibration du spectromètre, comprenant : des étapes de détermination de valeurs minimum et maximum de correspondance de mesures d'intensité lumineuse d'un flux lumineux produit par chaque diode électroluminescente, avec des valeurs de consigne de courant d'alimentation de chacune des diodes électroluminescentes, et/ou avec la température de la source lumineuse, et/ou des étapes de détermination de valeurs minimum et maximum de consigne courant d'alimentation de la source lumineuse, et/ou des étapes de détermination de valeurs minimum et maximum de temps d'intégration des cellules photosensibles du capteur, et/ou des étapes réalisées en présence d'un ou plusieurs produits de référence, de détermination d'une fonction fournissant un temps d'intégration optimal d'une cellule photosensible du capteur en fonction de mesures d'intensité lumineuse du flux lumineux produit par chaque diodes électroluminescentes, et/ou des étapes réalisées en présence d'un ou plusieurs produits de référence, durant lesquelles on fait varier de manière indépendante la température de la source lumineuse et/ou la température du capteur et/ou la température du produit de référence, on collecte des mesures d'intensité lumineuse fournies par le capteur, les valeurs de consigne de courant d'alimentation des diodes, des cellules du capteur, et des mesures de température, et on détermine une fonction fournissant une mesure d'intensité lumineuse corrigée correspondant à une température de référence, en fonction des mesures collectées.

Des modes de réalisation peuvent également concerner également un spectromètre comprenant une source de lumière émettant un faisceau lumineux et comprenant plusieurs diodes électroluminescentes présentant des spectres d'émission respectifs couvrant en combinaison une bande de longueur d'onde d'analyse, un capteur comprenant des cellules photosensibles disposées sur un trajet du faisceau lumineux après avoir interagi avec un produit à analyser, et un dispositif de commande ajustant des valeurs de consigne de courant d'alimentation de diodes électroluminescentes de la source lumineuse, et une durée d'intégration des cellules photosensibles, le dispositif de commande étant configuré pour mettre en oeuvre le procédé tel que précédemment défini.

Selon un mode de réalisation, le spectromètre est configuré pour allumer une seule diode électroluminescente de la source de lumière, à la fois, et pour recueillir une mesure d'intensité lumineuse en mesurant un courant à une borne de chacune des diodes électroluminescentes éteinte de la source lumineuse.

Selon un mode de réalisation, la source lumineuse est configurée pour fournir au dispositif de commande des tensions et/ou des courants d'alimentation des diodes électroluminescentes

Selon un mode de réalisation, les diodes électroluminescentes sont intégrées dans un même composant électronique, éventuellement avec la photodiode et/ou un capteur de température.

Selon un mode de réalisation, le spectromètre comprend un capteur de température fournissant des mesures de la température de la source lumineuse, et/ou un capteur de température fournissant des mesures de la température du capteur, et/ou un capteur de température fournissant des mesures de la température du produit à analyser.

Selon un mode de réalisation, le spectromètre comprend une cellule de mesure dans laquelle un produit à analyser interagit avec le faisceau lumineux, un élément optique pour conformer le faisceau en sortie de la source lumineuse et le transmettre à la cellule de mesure, un filtre de longueur d'onde configuré pour étaler spatialement les différentes longueurs d'onde du faisceau lumineux en sortie de la cellule de mesure et les transmettre à différentes cellules photosensibles du capteur, la source lumineuse, l'élément optique, la cellule de mesure, le filtre et le capteur étant assemblés de manière à ne former aucune zone d'air susceptible d'être traversée par le faisceau lumineux entre la source de lumière et le capteur.

Des exemples de réalisation de l'invention et de mise en oeuvre du procédé de l'invention seront décrits dans ce qui suit, à titre non limitatif en relation avec les figures jointes parmi lesquelles :

la figure 1 représente schématiquement un spectromètre selon un mode de réalisation,
la figure 2 représente schématiquement un circuit électronique de commande d'une source de lumière du spectromètre, selon un mode de réalisation,
les figures 3A et 3B représentent des spectres d'émission de diodes LED, sous la forme de courbes de variation d'intensité lumineuse émise en fonction de la longueur d'onde,
la figure 4 représente des spectres de sensibilité des diodes LED, sous la forme de courbes de variation d'intensité de courant électrique généré en fonction de la longueur d'onde,
la figure 5 représente schématiquement un circuit électronique de commande d'une source de lumière du spectromètre, selon un autre mode de réalisation,
la figure 6 représente une séquence d'étapes exécutée par un processeur de régulation du spectromètre, selon un mode de réalisation,
la figure 7 représente un graphique définissant des zones de fonctionnement du spectromètre.

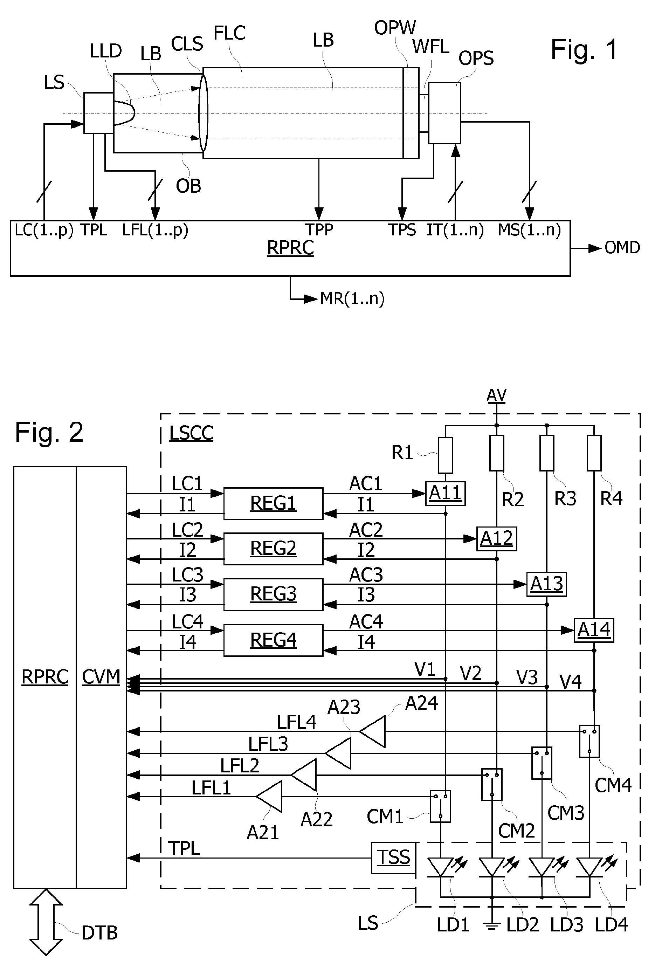

La figure 1 représente un spectromètre conçu notamment pour répondre aux contraintes spécifiques d'un capteur embarqué sur un véhicule ou un moteur thermique. Le spectromètre comprend :

- une source de lumière LS émettant un faisceau lumineux LB,
- un élément optique CLS à base de lentilles pour conformer le faisceau LB produit par la source LS,
- une cellule de mesure FLC dans laquelle un produit à analyser interagit avec le faisceau LB,
- un filtre de longueur d'onde WFL permettant d'étaler spatialement les différentes longueurs d'onde du faisceau LB en sortie de la cellule FLC, et
- un capteur OPS qui fournit des mesures permettant de constituer un spectre de la lumière en sortie du filtre WFL.

La source de lumière LS couvre au moins une bande de longueurs d'ondes dite d' "analyse" dans laquelle les mesures de spectre doivent être effectuées. L'élément optique CLS transforme la géométrie du faisceau LB et l'introduit dans la cellule de mesure FLC. L'élément optique CLS peut par exemple comprendre une lentille de collimation qui rend le faisceau LB à rayons parallèles. La cellule FLC comprend une fenêtre de sortie OPW transmettant au capteur OPS la lumière qui a interagi avec le produit à analyser. Le capteur OPS comprend plusieurs cellules photosensibles (n cellules) et reçoit la lumière transmise par la fenêtre OPW au travers du filtre WFL. Le filtre WFL répartit les longueurs d'onde composant la lumière transmise par la cellule de mesure FLC sur les cellules photosensibles du capteur OPS, de manière à ce que chaque cellule du capteur OPS ne reçoive qu'une plage de longueurs d'onde réduite appartenant à la bande de longueurs d'onde correspondant au spectre à générer. Le filtre WFL peut être par exemple de type Fabry-Perot, ou de type linéaire variable et générer une dispersion spatiale des longueurs d'onde de l'ordre de 20 à 50 nm/mm. Le capteur OPS peut être de type CCD ou CMOS, et comprendre une barrette de 20 à 200 cellules photosensibles.

La source lumineuse LS comprend une ou plusieurs diodes électroluminescentes LED (p diodes LED), qui peuvent être intégrées dans un unique composant électronique associé à une unique lentille LLD concentrant les rayons lumineux émis par les diodes en un faisceau d'angle solide faible. Le courant d'alimentation, ou la tension directe de chacune des diodes LED, peut être mesuré électroniquement par des moyens conventionnels connus de l'homme de l'art. La source lumineuse LS peut être fixée à l'élément optique CLS par l'intermédiaire d'un bloc optique OB traversé par le faisceau lumineux LB émis par la source LS, de manière à ne pas emprisonner d'air dans la zone traversée par le faisceau. Le bloc optique OB est transparent aux longueurs d'ondes à analyser et peut être plein ou bien creux et rempli d'un fluide inerte. Les faces latérales du bloc OB, non traversées par le faisceau lumineux issu de la source SL, peuvent être recouvertes d'un revêtement opaque pour empêcher des fuites de lumière par ces faces.

Le filtre WFL est fixé sur la fenêtre OPW, de manière à ne pas emprisonner d'air, directement ou par l'intermédiaire d'un bloc optique présentant les mêmes caractéristiques que celles du bloc optique OB mentionnées précédemment. De même, le filtre WFL est fixé sur une fenêtre d'entrée du capteur OPS de manière à ne pas emprisonner d'air, directement ou par l'intermédiaire d'un bloc optique pouvant présenter les même caractéristiques que celles du bloc optique OB mentionnées précédemment.

De cette manière, le spectromètre peut être monobloc, ce qui le rend facile à stocker et à manipuler industriellement. L'alignement des différents éléments optiques composant le spectromètre peut ainsi être ajusté une fois pour toutes lors de la fabrication du spectromètre. L'absence d'air dans la zone traversée par le faisceau lumineux LB entre la source LS et le capteur OPS permet également de s'affranchir de tout risque de condensation de vapeur d'eau dans cette zone, la présence de gouttelettes d'eau sur le trajet du faisceau LB pouvant en effet perturber l'analyse du produit dans la cellule de mesure FLC.

Le spectromètre est contrôlé par un dispositif de commande et de régulation RPRC qui régule le courant d'alimentation LCx (x étant un nombre entier compris entre 1 et p) de chaque diode LED de la source de lumière LS, ainsi qu'un temps d'intégration ITy (y étant un nombre entier compris entre 1 et n) de chaque cellule photosensible y du capteur OPS, en fonction de différents paramètres comprenant au moins l'un des paramètres suivants : des intensités LFLx de flux lumineux émis par les diodes LED de la source de lumière LS, la température TPL de la source LS, la température TPP du produit à analyser, et la température TPS du capteur OPS. Le temps d'intégration ITy d'une cellule photosensible correspond au temps pendant lequel un puits de potentiel de la cellule photosensible est laissé en charge sous l'effet d'un flux lumineux.

Selon un mode de réalisation, l'intensité LFLx du flux lumineux émis par chaque diode LED de la source est mesuré par des diodes LED de la source LS maintenues éteintes (recevant un courant d'alimentation nul), seules une ou plusieurs des diodes LED de la source LS étant allumées à un instant donné. Pour générer un spectre de mesure, les diodes LED de la source sont allumées successivement par groupe d'au moins une diode LED, tandis que chacune d'au moins une partie des diodes LED maintenues éteintes de la source LS, est utilisée en photodiode pour mesurer l'intensité lumineuse émise par la source LS. A la suite de l'allumage d'un groupe d'au moins une diode LED, un spectre est mesuré à l'aide des cellules photosensibles du capteur OPS. Lorsque toutes les diodes LED ont été allumées au moins une fois, durant un cycle d'allumage des diodes LED, les spectres obtenus sont combinés entre eux pour obtenir le spectre de mesure recherché.

Selon un mode de réalisation, le dispositif de régulation RPRC réalise une régulation en mode bouclé, à la fois du courant d'alimentation LCx des diodes LED de la source LS, et du temps d'intégration ITy des cellules photosensibles du capteur OPS. Lorsque le temps d'intégration ITy a atteint une valeur limite, sans qu'un signal satisfaisant (compris entre deux valeurs limites) soit obtenu en sortie du capteur OPS, l'intensité ou la tension du courant d'alimentation LCx de la source lumineuse est ajustée. Cette régulation vise à stabiliser le signal reçu par chacune des cellules photosensibles du capteur, et ainsi à minimiser les impacts de facteurs extérieurs au produit à analyser lui-même, tels que des variations de la température ambiante ou le vieillissement des diodes LED de la source LS. Cette régulation vise à permettre au spectromètre de fonctionner dans une très large gamme de températures, tout en conservant un rapport signal/bruit relativement constant dans le temps et homogène en fonction de la longueur d'onde, et donc une sensibilité de mesure sensiblement constante.

Le temps d'intégration du capteur OPS peut être ajusté individuellement pour chaque cellule photosensible du capteur OPS, ou globalement pour toutes les cellules photosensibles, par exemple en choisissant comme temps d'intégration global, la valeur minimum des temps d'intégration ITy déterminés pour chacune des cellules y.

Le dispositif de régulation RPRC reçoit une mesure d'intensité lumineuse MSy pour chaque cellule y du capteur OPS, et peut fournir des mesures MSCy corrigées en fonction de différents paramètres comme la température TPP du produit à analyser et/ou la température TPS du capteur OPS.

La figure 2 représente un circuit électronique de commande LSCC de la source de lumière LS, selon un mode de réalisation. Sur la figure 2, le circuit LSCC est connecté à la source LS et est relié au dispositif de régulation RPRC par l'intermédiaire d'un module de conversion CVM comprenant plusieurs convertisseurs analogiques / numériques et plusieurs convertisseurs numériques / analogiques. La source de lumière LS comprend plusieurs diodes LED LD1, LD2, LD3, LD4. Le circuit LSCC comprend des circuits de régulation de courant REG1, REG2, REG3, REG4, des amplificateurs à gain ajustable A11, A12, A13, A14, A21, A22, A23, A24, des commutateurs CM1, CM2, CM3, CM4 et des résistances R1, R2, R3, R4. La cathode de chaque diode LD1 à LD4 est connectée à la masse. L'anode de chaque diode LD1 à LD4 est reliée par l'intermédiaire d'un commutateur CM1 à CM4 respectif, à l'entrée d'un des amplificateurs A21 à A24 et à la sortie d'un des amplificateurs A11 à A14. La sortie de chacun des amplificateurs A21 à A24 est connectée à l'entrée d'un convertisseur analogique/numérique du module de conversion CVM, qui transmet au dispositif RPRC des valeurs numériques de mesures d'intensité lumineuse LFL1, LFL2, LFL3, LFL4 fournies par les diodes LD1 à LD4. Chaque amplificateur A11 à A14 est relié à une source de tension d'alimentation AV par l'intermédiaire d'une des résistances R1 à R4. Chaque amplificateur A11 à A14 reçoit sur une entrée de commande de gain un signal de commande de courant AC1 à AC4 émis par l'un des régulateurs REG1 à REG4. Chaque régulateur REG1 à REG4 effectue une mesure du courant d'alimentation I1 à I4 de la diode LD1 à LD4 à laquelle il est connecté. Chaque régulateur REG1 à REG4 reçoit une valeur de courant de consigne LC1 à LC4 fournie sous forme numérique par le dispositif de régulation RPRC et convertie par un convertisseur numérique/analogique du module CVM. Chaque régulateur REG1 à REG4 régule l'un des signaux de commande de courant AC1 à AC4 en fonction de la valeur du courant de consigne LC1 à LC4 qu'il reçoit et en fonction de l'intensité du courant I1 à I4 qu'il mesure à la sortie de l'amplificateur A1 à A4 dont il commande le gain, de manière à ce que le courant I1 à I4 mesuré corresponde à la valeur du courant de consigne LC1 à LC4.

Le circuit LSCC ou la source de lumière LS peut comprendre un capteur de température TSS pour mesurer la température de la source LS. Le capteur de température TSS est alors connecté à un convertisseur analogique numérique du module CVM, qui fournit au dispositif RPRC des valeurs numériques de mesures de température TPL de la source LS.

Chaque régulateur REG1 à REG4 peut transmettre la mesure de courant I1 à I4 à un convertisseur analogique/numérique du module CVM, qui transmet à son tour une valeur numérique correspondante au dispositif RPRC. De même, l'anode de chaque diode LD1 à LD4 peut être également connectée à un convertisseur analogique numérique du module CVM, qui fournit au dispositif RPRC une valeur numérique représentative de la tension V1 à V4 de l'anode de la diode. Par ailleurs, les diodes LD1 à LD4 peuvent être formées sur un même substrat semi-conducteur et intégré dans un même composant. Le dispositif RPRC peut comprendre un connecteur pour se connecter au moyen d'un bus série ou parallèle DTB à un calculateur et pour transmettre des spectres de mesure MR(1..n) et un état de fonctionnement OMD, et éventuellement d'autres signaux par exemple relatifs aux mesures effectuées sur le spectromètre.

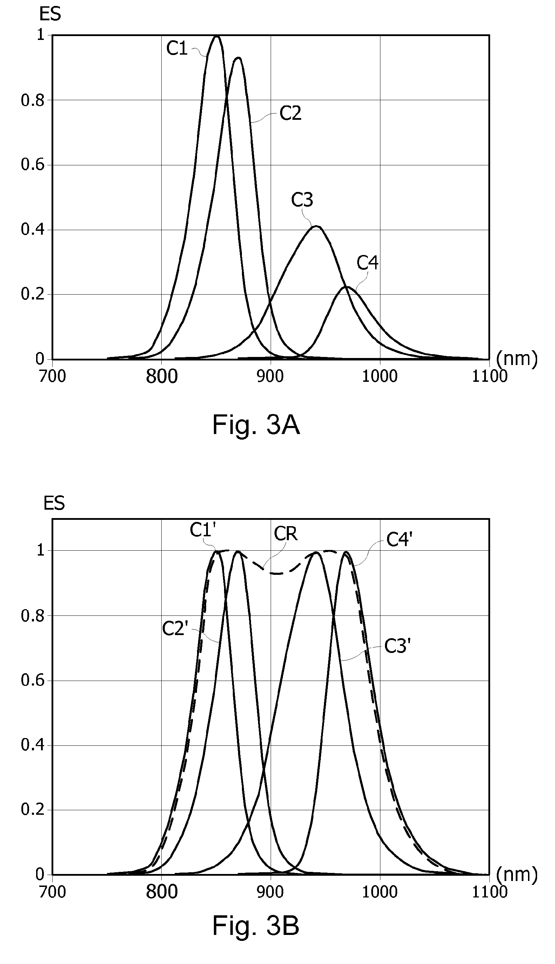

Dans l'exemple de la figure 2, la source de lumière LS comprend quatre diodes LEDs. Chaque diode LED peut émettre de la lumière ayant un spectre de la forme d'une courbe de Gauss dissymétrique. Ainsi, la figure 3A représente des spectres d'émission des diodes LD1 à LD4, sous la forme de courbes C1 à C4 de variation d'intensité lumineuse émise en fonction de la longueur d'onde. Les courbes C1 à C4 de la figure 3A, ont été obtenues à courant d'alimentation constant et identique pour toutes les diodes LD1 à LD4. Les valeurs d'intensité lumineuse indiquées sur l'axe des ordonnées sont des valeurs normalisées. Dans l'exemple de la figure 3A, la courbe C1 du spectre de la diode LD1 présente une intensité maximum à 1 à une longueur d'onde égale à environ 850 nm. La courbe C2 du spectre de la diode LD2 présente une intensité maximum à environ 0.92 à une longueur d'onde égale à environ 890 nm. La courbe C3 du spectre de la diode LD3 présente une intensité maximum à environ 0.41 à une longueur d'onde égale à environ 940 nm. La courbe C4 du spectre de la diode LD4 présente une intensité maximum à environ 0.22 à une longueur d'onde égale à environ 970 nm. Il peut être noté sur la figure 3A que plus la longueur d'onde de l'intensité lumineuse maximum émise par la diode LD1 à LD4 est élevée, plus cette intensité est faible.

La figure 3B représente sous la forme de courbes C1' à C4' de variation d'intensité lumineuse émise en fonction de la longueur d'onde, les spectres d'émission des diodes LD1 à LD4 après ajustement du courant d'alimentation LC1 à LC4 de chaque diode LD1 à LD4 par le dispositif de régulation RPRC. Sur la figure 3B, les courbes C1' à C4' présentent toutes une valeur d'intensité normalisée maximum à 1. La figure 3B représente également sous la forme d'une courbe CR, un spectre d'émission combiné émis lorsque les diodes LD1 à LD4 sont allumées en même temps, avec leur courant d'alimentation LC1 à LC4 ajusté. Dans l'exemple de la figure 3B, le spectre d'émission combiné de la source lumineuse s'étend 840 à 980 nm environ. Il est à noter que les valeurs numériques apparaissant dans les figures 3A et 3B sont données à titre d'exemple et peuvent varier notamment en fonction des conditions de fabrication des diodes.

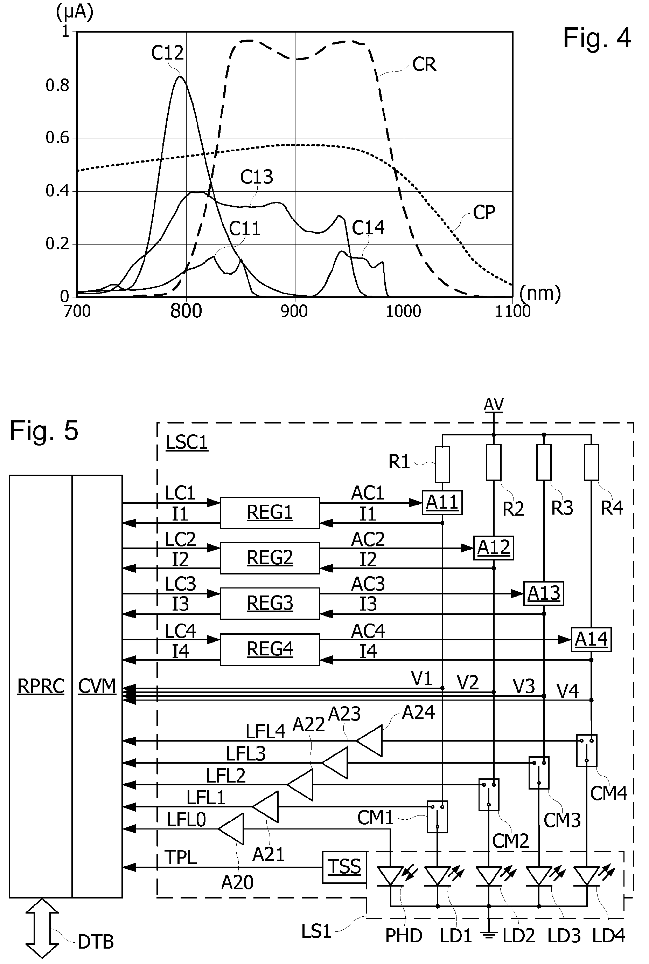

La figure 4 représente des spectres de sensibilité des diodes LD1 à LD4 sous la forme de courbes C11 à C14 de variation d'intensité de courant généré en fonction de la longueur d'onde. Ces spectres ont été obtenus en mesurant l'intensité du courant généré par chaque diode LD1 à LD4 lorsque la surface photoémettrice de celle-ci est soumise à un flux lumineux de 1 mW/cm$^2$ et en l'absence de courant d'alimentation. D'après la figure 4, le courant généré par les diodes LD1 à LD4 atteint quelques dixièmes de μA lorsque la diode est soumise à un flux lumineux de 1 mW/cm$^2$.

Selon un mode de réalisation, les commutateurs CM1 à CM4 sont commandés de manière à ce qu'une seule des diodes LD1 à LD4 soit allumée à la fois, les autres diodes étant éteintes (ne recevant pas de courant d'alimentation) pour fonctionner en tant que photodiodes. Les diodes éteintes fournissent chacune une mesure LFL1 à LFL4 (trois mesures parmi quatre possibles) de l'intensité lumineuse générée par la diode allumée dans leur spectre de sensibilité respectif. Une fois qu'un spectre de mesure a été fourni par le capteur OPS avec une diode allumée, celle-ci est éteinte et une autre diode est allumée, et ainsi de suite avec les autres diodes. Les spectres obtenus avec chacune des diodes allumées sont ensuite combinés d'une manière appropriée pour obtenir le spectre résultant MR(1..n).

Il est à noter que comme une seule diode LD1 à LD4 est allumée en même temps, le circuit LSCC peut être simplifié en ne conservant qu'un seul des régulateurs REG1 à REG4, et un seul des amplificateurs A11 à A14. Chacun des commutateurs CM1 à CM4 comprend alors une borne connectée à la sortie de l'amplificateur A11 à A14 restant, une borne connectée à l'anode d'une diode LD1 à LD4 et une borne connectée à l'entrée d'un des amplificateurs A21 à A24.

Les commutateurs CM1 à CM4 peuvent être omis si les régulateurs REG1-REG4 (ou le régulateur restant) mettent à un potentiel flottant leur entrée de courant I1 à I4 et les amplificateurs A11 à A13 (ou l'amplificateur restant) mettent à un potentiel flottant leur sortie de courant amplifié.

Par ailleurs, le spectre d'émission résultant (courbe CR) peut ne pas être entièrement couvert par le spectre de sensibilité combiné des diodes LD1 à LD4. Il peut alors être prévu d'utiliser une photodiode mesurant l'intensité lumineuse émise directement par chaque diode allumée. Cette photodiode peut être par exemple intégrée dans la source LS.

Ainsi, la figure 5 représente un circuit électronique de commande LSC1 d'une source de lumière LS1, selon un mode de réalisation. Sur la figure 5, la source de lumière LS1 diffère de la source de lumière LS en ce qu'elle comprend une photodiode PHD. Le circuit LSC1 diffère du circuit LSCC en ce qu'il comprend un amplificateur A20 supplémentaire recevant le signal de sortie de la photodiode PHD et fournissant un signal électrique de mesure d'intensité lumineuse LFL0 à un convertisseur analogique/numérique du module de conversion CVM. La valeur numérique de la mesure LFL0 est utilisée avec les valeurs numériques des mesures LFL1 à LFL4, par le dispositif de régulation RPRC pour réguler l'intensité lumineuse fournie par la source LS1. Un exemple de spectre de sensibilité de photodiode est représenté sur la figure 4. Ainsi, la figure 4 présente également une courbe CP de sensibilité d'une photodiode utilisable dans le circuit de la figure 5. En effet, la courbe CP est sensiblement constante (varie entre 0.5 et 0.6) dans la bande de longueurs d'onde d'analyse, environ entre 840 et 980 nm.

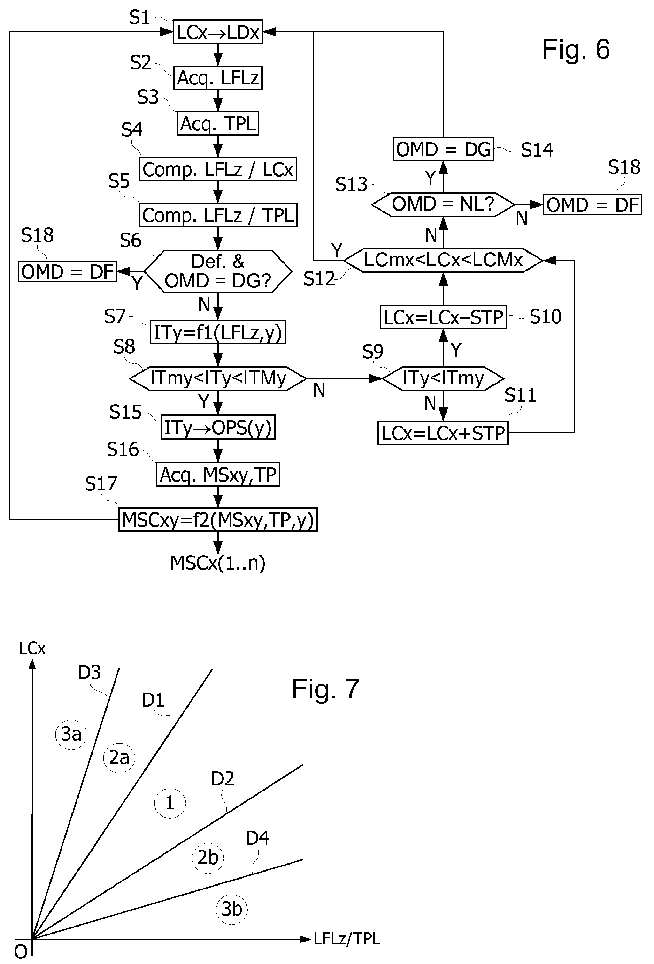

La figure 6 représente une séquence d'étapes qui peut être exécutée par le dispositif de régulation RPRC. Sur la figure 6, la séquence d'étapes comprend des étapes S1 à S18. A l'étape S1, le dispositif RPRC ajuste à une valeur de consigne LCx le courant d'alimentation (intensité ou tension) d'une diode LDx de la source de lumière LS (x étant successivement égal à 1, 2, 3 et 4 dans l'exemple de la Figure 2). La valeur LCx est celle d'une valeur initiale prédéfinie ou une valeur précédemment appliquée à la diode LDx. Aux étapes suivantes S2 et S3, le dispositif RPRC reçoit des mesures d'intensité lumineuse LFLz (z étant différent de x) provenant des diodes LD1-LD4 non allumées, et éventuellement, une mesure d'intensité lumineuse LFL0 provenant d'une photodiode et une mesure de température TPL provenant du capteur TSS. Aux étapes S4 et S5 suivantes, le dispositif RPRC détermine par comparaison si les mesures d'intensité lumineuse LFLz et de température TPL, reçues sont cohérentes entre elles et avec le courant LCx fourni à la diode LDx. Ces étapes peuvent être réalisées à partir d'abaques de variation de l'intensité lumineuse émise par une diode LDx en fonction de son courant d'alimentation et de sa température. Les comparaisons effectuées aux étapes S4 et S5 permettent de réaliser un autodiagnostic du spectromètre à l'étape S6. Ainsi, si les comparaisons effectuées aux étapes S4 et S5 révèlent un dysfonctionnement et que le spectromètre est dans un mode de fonctionnement OMD normal, le spectromètre passe dans un mode de fonctionnement OMD dégradé DG. Si les comparaisons effectuées aux étapes S4 et S5 révèlent un dysfonctionnement et que le spectromètre est dans un état de fonctionnement dégradé DG, le spectromètre passe à l'étape S18 dans un mode de défaut DF dans lequel il ne peut plus fonctionner. Si les comparaisons effectuées aux étapes S4 et S5 ne révèlent pas de dysfonctionnement, le dispositif RPRC exécute les étapes suivantes S7 et S8. A l'étape S7, le dispositif RPRC détermine un temps d'intégration optimum ITy de chaque cellule photosensible y du capteur OPS à l'aide d'une fonction f1 appliquée aux intensités lumineuses LFLz mesurées à l'étape S2. La fonction f1 peut être déterminée par des abaques donnant le temps d'intégration optimum de chaque cellule y du capteur OPS, en fonction de mesures d'intensité de la lumière émise LFLz fournies par chaque diode fonctionnant en photodiode. A l'étape S8, le dispositif RPRC compare pour chaque cellule y, le temps d'intégration ITy obtenu à des valeurs minimum ITmy et maximum ITMy déterminées pour la cellule y. Si le temps d'intégration ITy est compris entre les valeurs minimum et maximum ITmy, ITMy pour chaque cellule y, le dispositif RPRC exécute les étapes S15 à S17 puis retourne à l'étape S1 pour exécuter une nouvelle phase de régulation, sinon il exécute l'étape S9.

A l'étape S9, le dispositif RPRC compare le temps d'intégration optimum ITy au temps d'intégration minimum ITmy pour chaque cellule y pour laquelle le test à l'étape S8 n'a pas été vérifié. Si le temps d'intégration ITy est inférieur au temps d'intégration ITmy pour tout ou partie des cellules y du capteur OPS, le module RPRC exécute l'étape S10, puis l'étape S12, sinon (cas où le temps d'intégration ITy est supérieur au temps d'intégration maximum ITMy pour tout ou partie des cellules y) il exécute les étapes S11 et S12. A l'étape S10, le dispositif RPRC diminue d'un pas STP le courant d'alimentation LCx de la diode LED LDx. A l'étape S11, le dispositif RPRC incrémente le courant d'alimentation LCx de la diode LDx du pas STP. A l'étape S12, le dispositif RPRC détermine si le nouveau courant d'alimentation LCx obtenu à l'étape S10 ou S11 est compris entre des valeurs minimum LCmx et maximum LCMx déterminées pour la diode LDx. Si tel est le cas, le dispositif RPRC retourne à l'étape S1 pour exécuter une nouvelle phase de régulation. Dans le cas contraire, le dispositif RPRC exécute l'étape S13 où il teste le mode de fonctionnement OMD du spectromètre. Si le mode OMD est normal NL, le dispositif RPRC exécute l'étape S14 où le mode de fonctionnement OMD passe en mode dégradé DG. Si à l'étape S13, le mode OMD est dégradé DG, le dispositif RPRC exécute l'étape S18, où le mode OMD passe en défaut DF.

Ainsi, aux étapes S10 et S11, si le temps d'intégration optimal ITy déterminé pour au moins une cellule photosensible y est en dehors des seuils minimum et maximum ITmy et ITMy, on ajoute au courant d'alimentation LCx de la diode LED LDx, un pas STP d'une certaine amplitude, positif ou négatif (positif si le temps d'intégration optimal ITy est supérieur au seuil maximum ITMy, et négatif si ce temps d'intégration est inférieur au seuil minimum ITmy). Un nouveau temps d'intégration optimal ITy est alors à nouveau déterminé aux étapes S1 à S7 en fonction du nouveau courant LCx. L'exécution des étapes S1 à S12 est répétée tant que le temps d'intégration optimal ITy se trouve en dehors des seuils ITmy et ITMy et tant que le courant LCx est compris entre les seuils LCmx et LCMx.

A l'étape S15, le dispositif RPRC fixe le temps d'intégration de chaque cellule y du capteur OPS à son temps d'intégration optimum ITy déterminé à l'étape S7. A l'étape S16, le dispositif RPRC procède à l'acquisition d'une mesure MSxy fournie par chaque cellule y avec la diode LDx allumée, ainsi qu'éventuellement, d'une mesure de la température TP du produit à analyser dans la cellule de mesure FLC (TPP) et/ou d'une mesure de température du capteur OPS (TPS) et/ou une mesure de température de la source LS (TPL). A l'étape S17, le dispositif RPRC applique une correction à chaque mesure MSxy à l'aide d'une fonction f2 et fournit une mesure corrigée MSCxy pour chaque cellule y. La fonction f2 est appliquée à la température TP mesurée (ou aux températures mesurées) à l'étape S16.

La séquence d'étapes S1 à S18 permet ainsi d'obtenir un spectre corrigé MSCx(1..n) pour chaque diode LDx. La séquence d'étapes S1 à S15 est ainsi exécutée pour chaque diode LDx de la source LS afin d'obtenir au moins un spectre MSCx(1..n) pour chaque diode LDx. Après une normalisation des spectres obtenus pour chaque diode, un spectre résultant MR(1..n) est calculé en additionnant les spectres obtenus avec chaque diode LDx allumée, avec un coefficient de pondération Pxy spécifié pour chaque diode LDx et chaque cellule y du capteur OPS :

$$MRy = \sum_{x} Pxy \cdot MSCxy \qquad (1)$$

Les coefficients de pondération Pxy peuvent être ajustés afin de donner plus d'importance au signal utile dans le spectre résultant. En d'autres termes, les signaux des cellules y mesurant les signaux bruts les plus élevés, et donc fournissant l'information la plus fiable (rapport signal sur bruit élevé), sont associés à un coefficient de pondération Pxy plus élevé. Les coefficients de pondération Pxy sont déterminés durant la phase de calibration et dépendent de la température TPL de la source LS.

Le spectre résultant MR(1..n) obtenu peut en outre faire l'objet d'un calcul de moyenne avec plusieurs autres spectres successifs obtenus, afin d'obtenir un spectre exploitable par un dispositif de régulation de paramètres de fonctionnement d'un moteur thermique. Le nombre de spectres MR(1..n) utilisés pour ce calcul de moyenne peut être augmenté au passage du mode de fonctionnement OMD normal NL au mode dégradé DG. Le nombre de spectres obtenus à moyenner en mode normal, peut être de l'ordre de 5 à 20, et en mode dégradé, de l'ordre de 100.

Il est à noter que le temps d'intégration ITy de toutes les cellules photosensibles y du capteur OPS peut, à l'étape S15, être fixé globalement au plus petit temps d'intégration déterminé à l'étape S7 pour chaque cellule y.

Aux étapes S4, S5, S6, S12, S13, S14 et S18, le dispositif RPRC effectue un autodiagnostic du spectromètre en distinguant trois modes de fonctionnement OMD du spectromètre : le mode de fonctionnement normal NL dans lequel le spectromètre produit des mesures exploitables, le mode de fonctionnement dégradé DG dans lequel le spectromètre produit toujours des mesures exploitables, mais dans des conditions anormales, et un mode de défaut DF dans lequel le spectromètre est considéré défaillant et ne peut plus fournir de mesure exploitable. Dans le mode dégradé DG, le temps pour fournir une mesure est largement augmenté ou bien le degré de confiance dans les mesures fournies décroit (peut être au choix de l'utilisateur). Le spectromètre est considéré en défaut (mode OMD = DF) par exemple lorsque les mesures d'intensité lumineuse LFLz fournies par les diodes LD1-LD4 éteintes ne correspondent pas au courant LCx fourni à la diode allumée, ou à la température TPS de la source LS. Le dispositif RPRC peut émettre signal d'autodiagnostic indiquant le mode de fonctionnement OMD du spectromètre. Ce signal peut être transmis par exemple à un ordinateur de bord du véhicule dans lequel est embarqué le spectromètre.

La figure 7 représente un graphe du courant de consigne LCx fourni à une diode LED LDx de la source LS (axe des ordonnées) en fonction de mesures d'intensité lumineuse LFLz ou de la température TPL de la source LS (axe des abscisses). Ce graphe présente quatre droites D1, D2, D3, D4 passant par l'origine O du graphe. Les droites D1 et D2 délimitent entre elles une zone 1 de fonctionnement correspondant au mode de fonctionnement normal NL dans lequel le courant LCx fourni à une diode LED LDx de la source LS, la température TPL de la source et/ou les intensités lumineuses LFLz mesurées présentent des valeurs normales (ni trop faibles ni excessives). L'axe des ordonnées et la droite D3 délimitent entre elles une zone 3a. L'axe abscisses et la droite D2 D3 délimitent entre elles une zone 3b. Les zones 3a et 3b correspondent au mode de défaut DF dans lequel le courant LCx fourni à une diode LDx de la source de lumière est fort et l'intensité lumineuse fournie par la source est anormalement faible, ou dans lequel le courant fourni à la diode LDx est faible et la température de la source TPL est anormalement élevée. Entre la zone 1 et les zones 3a et 3b se trouvent des zones 2a et 2b correspondant au mode de fonctionnement dégradé DG.

Les valeurs minimum LCmx et maximum LCMx du courant d'alimentation de chaque diode LDx, résultent de tests effectués lors d'une phase de calibration pour déterminer la plage de fonctionnement idéale de chacune des diodes électroluminescentes de la source LS. La valeur maximum LCMx est déterminée afin de ne pas accélérer le vieillissement de la diode. La valeur minimum LCmx peut être choisie de manière à assurer une répétabilité et une stabilité du flux lumineux émis par la diode.

Les valeurs minimum ITmy et maximum ITMy de chaque cellule y du capteur OPS sont également déterminées lors de la phase de calibration par des tests permettant de déterminer une plage de fonctionnement idéale des cellules photosensibles y du capteur OPS, considérées indépendamment ou dans leur ensemble. La valeur maximum ITMy est déterminée afin d'éviter une saturation de la cellule photosensible y. La valeur minimum ITmy est déterminée de manière à obtenir un signal stable et répétable, tout en respectant une valeur cible minimale de rapport signal/bruit, préalablement définie.

De même, les fonctions f1 et f2 utilisées aux étapes S7 et S17 peuvent être déterminées durant la phase de calibration. Ainsi, la fonction f1 donnant le temps d'intégration optimal ITy de chaque cellule y du capteur OPS en fonction des intensités lumineuses LFLz mesurées par les diodes LD1-LD4 non allumées, peut être déterminée en utilisant un ou plusieurs produits de référence, fluides ou solides, avec lesquels une série de tests est réalisée. Pour chacun des produits de référence et chaque diode LED LDx, on fait varier la valeur de consigne de courant d'alimentation LCx de la diode LDx, et on mémorise les intensités lumineuses LFLz mesurées par les diodes LD1-LD4 éteintes et la photodiode PHD éventuelle. Pour chaque valeur de mesure d'intensité lumineuse LFLz et chaque cellule y, on recherche un temps d'intégration optimal ITy permettant d'obtenir un flux lumineux mesuré par la cellule y, stable et constant, c'est-à-dire sensiblement indépendant de l'intensité du flux lumineux émis par la source LS. On obtient ainsi des groupes de mesures (intensités lumineuses LFLz - temps d'intégration optimal ITy). A chaque groupe de mesure, la température de la source TPL, si elle est disponible, est également collectée, ainsi que la température du produit TPP et la consigne du courant LCx correspondante. Les variations des intensités lumineuses LFLz mesurées par chaque diode LD1-LD4 éteinte et/ou par l'éventuelle photodiode PHD, sont telles que pour une partie des mesures effectuées, le temps d'intégration optimal ITy est en dehors des valeurs de seuil prédéfinies ITmy, ITMy. A partir des groupes de mesures, on établit soit des tables de correspondance, soit des abaques, soit des modèles prédictifs, permettant de déterminer le temps d'intégration optimal ITy de chaque cellule y en fonction des intensités lumineuses LFLz mesurées. A partir des données ainsi collectées, on détermine des valeurs minimum et maximum de correspondance entre les mesures d'intensité lumineuse LFLz, et la température TPL de la source LS (si celle-ci est disponible), et entre les mesures d'intensité lumineuse LFLz et la valeur du courant d'alimentation LCx de la diode LED LDx allumée. Ces valeurs minimum et maximum de correspondance sont utilisées aux étapes S4 et S5 pour effectuer un autodiagnostic du spectromètre.

La fonction f2 permettant de corriger la mesure de l'intensité lumineuse MSxy fournie par chaque cellule y en fonction de la température TP, peut être déterminée par une série de tests durant laquelle on fait varier de manière indépendante la température TPL de la source LS, la température TPS du capteur OPS et la température TPP du produit à analyser. Ces températures s'étendent de -40 à +105°C, ou idéalement de - 50 à +150°C avec au moins un produit de référence fluide ou solide. Pour chacun des tests, les valeurs de mesure d'intensité MSxy, de courant de consigne LCx et de température sont collectées. A partir de ces mesures, on établit soit des tables de correspondance, soit des abaques, soit des modèles prédictifs permettant de déterminer pour chaque cellule photosensible y du capteur OPS l'intensité lumineuse que cette cellule aurait mesurée à une certaine température de référence fixe (par exemple 20°C) et ceci pour obtenir un spectre corrigé indépendant des conditions ambiantes de température et des conditions de température des composants du spectromètre. Les abaques obtenues permettent de déterminer une mesure corrigée d'intensité lumineuse MSCxy à la température de référence en fonction de la mesure d'intensité lumineuse MSxy relevée à la température ambiante par chaque cellule photosensible y, en fonction des températures TPL, TPP, TPS de la source LS, du produit dans la cellule de mesure FLC et du capteur OPS, et en fonction du temps d'intégration ITy et du courant d'alimentation LCx de la diode LED LDx. Certains des paramètres listés précédemment peuvent ne pas être pris en compte, et en particulier la température TPS du capteur OPS, notamment si ce dernier est équipé d'une compensation en température efficace.

Grâce à la transposition de spectre effectuée pour ramener le spectre mesuré MSx(1..n) à un spectre MSCx(1..n) qui aurait été obtenu à une température de référence, le spectromètre qui vient d'être décrit peut ainsi fonctionner dans une très large gamme de températures, y compris avec des différences de température très importantes entre le produit à analyser et la source de lumière LS. Il est à noter que cette disposition est obtenue sans utiliser une voie de référence complexe nécessitant un second capteur qui reçoit directement la lumière émise par la source, comme proposé dans la demande de brevet FR 2 940 447, mais seulement avec des mesures d'intensité lumineuse LFL0-LFL4 effectuées directement sur le flux lumineux émis par les diodes LD1-LD4, donc à moindre coût et sans augmenter l'encombrement du spectromètre.

Au lieu de se baser sur les intensités lumineuses LFL0-LFL4 mesurées par les diodes LD1-LD4 éteintes et/ou la photodiode PHD, la régulation réalisée par la séquence d'étapes S1 à S18 peut être effectuée sur la base de la température de la source TPL et/ou du produit à analyser TPP, ou encore sur la base des tensions Vx ou des courants Ix (x étant compris entre 1 et 4 dans l'exemple de la figure 2) mesurés dans le circuit de la figure 2. En outre, les mesures d'intensité lumineuse LFL1-LFL4 fournies par les diodes éteintes, la température TPL et/ou les tensions Vx et/ou les courants Ix peuvent être utilisés pour vérifier le bon fonctionnement de la photodiode PHD et du capteur de température TSS.

Il apparaîtra clairement à l'homme de l'art que la présente invention est susceptible de diverses variantes de réalisation et diverses applications. En particulier, le procédé de commande n'est pas limité à l'utilisation de diodes électroluminescentes en tant que source lumineuse. En effet, le procédé de régulation précédemment décrit peut s'appliquer à une source lumineuse quelconque, dont l'intensité lumineuse émise peut être ajustée par le courant d'alimentation de la source lumineuse.

Par ailleurs, le procédé de commande peut s'appliquer à d'autres spectromètres que celui décrit en référence à la figure 1. Il importe simplement que la durée d'intégration du capteur du spectromètre puisse être ajustée, et que le spectromètre puisse fournir des mesures représentatives du fonctionnement de la source lumineuse.

L'étape de correction des mesures de spectre obtenues, pour tenir compte de la température des divers composants du spectromètre, n'est pas non plus nécessaire. Il peut en effet être envisagé de placer le spectromètre dans une enceinte dont la température est maintenue constante, ou de ne procéder à une mesure de spectre que lorsque la température du spectromètre a atteint une température de consigne.

La source de lumière peut comprendre plusieurs groupes de plusieurs diodes électroluminescentes ayant des spectres d'émission identiques ou sensiblement identiques, c'est-à-dire aux dérives de fabrication près. Il en résulte que plusieurs diodes, à savoir toutes les diodes de chaque groupe peuvent être allumées en même temps.

## Revendications

1. Procédé de commande d'un spectromètre d'analyse d'un produit, le spectromètre comprenant une source de lumière (LS) comportant plusieurs diodes électroluminescentes (LD1-LD4) ayant des spectres d'émission respectifs couvrant en combinaison une bande de longueurs d'onde d'analyse,
   **caractérisé en ce qu'**il comprend des étapes consistant à :

   fournir un courant d'alimentation (Ix) à au moins une des diodes électroluminescentes (LD1 à LD4) pour l'allumer, et mesurer une intensité lumineuse (LFLz) émise par la source de lumière (LS) en mesurant un courant à une borne d'au moins une autre des diodes électroluminescentes maintenue éteinte,
   déterminer en fonction de chaque mesure d'intensité lumineuse, une valeur de consigne (LCx) du courant d'alimentation de chaque diode allumée, et
   réguler le courant d'alimentation de chaque diode allumée pour qu'il corresponde à la valeur de consigne.

2. Procédé selon la revendication 1, comprenant des étapes d'allumage successif de groupes d'au moins une diode électroluminescente (LD1-LD4), les diodes d'un groupe ayant des spectres d'émission sensiblement identiques, tandis que d'autres diodes électroluminescentes sont maintenues éteintes, de mesure d'une intensité lumineuse (LFLz) par chacune des autres diodes électroluminescentes maintenues éteintes, et d'ajustement en fonction de chaque mesure d'intensité lumineuse obtenue, de la valeur de consigne de courant d'alimentation (LCx) de la diode allumée.

3. Procédé selon l'une des revendications 1 et 2, comprenant des étapes consistant à :

   déterminer en fonction des mesures d'intensité lumineuse (LFLz) une valeur de durée d'intégration (ITy) de cellules photosensibles (y) d'un capteur (OPS) du spectromètre, disposées sur un trajet d'un faisceau lumineux (LB) émis par la source de lumière et ayant interagi avec un produit à analyser, et

si la valeur de durée d'intégration et/ou la valeur de consigne de courant d'alimentation (LCx) de chaque diode allumée (LDx) est comprise entre des valeurs de seuil (ITmy, ITMy, ICmx, ICMx), fournir à chaque diode allumée un courant d'alimentation (Ix) régulé en fonction de la valeur du courant de consigne d'alimentation, ajuster la durée d'intégration de chaque cellule photosensible à la valeur déterminée de durée d'intégration, et acquérir au moyen de chaque cellule du capteur des mesures d'intensité lumineuse (MSxy) permettant de former un spectre.

4. Procédé selon la revendication 3, dans lequel de nouvelles valeurs de consigne de courant d'alimentation (LCx) de chaque diode allumée et/ou de durée d'intégration (ITy) de chaque cellule sont déterminées et un courant d'alimentation (Ix) correspondant à la valeur déterminée de consigne de courant d'alimentation est fourni à chaque diode électroluminescente allumée, tant que la valeur déterminée de durée d'intégration n'est pas comprise entre les valeurs de seuil (ITmy, ITMy).

5. Procédé selon l'une des revendications 1 et 4, dans lequel la consigne de courant d'alimentation (LCx) de chaque diode électroluminescente allumée est ajustée aussi en fonction d'une mesure d'intensité lumineuse (LFL0) fournie par une photodiode (PHD) de la source de lumière (LS), et/ou d'une mesure de la température (TPL) de la source de lumière (LS), et/ou une mesure d'intensité (Ix) ou de tension d'alimentation (Vx) de chaque diode allumée.

6. Procédé selon l'une des revendications 1 à 5, comprenant des étapes de test d'autodiagnostic comprenant au moins l'une des comparaisons suivantes : des comparaisons pour déterminer si les mesures d'intensité lumineuse (LFLz), et/ou des mesures (Ix, Vx) de courant d'alimentation fourni à la diode allumée (LDx), et/ou des mesures de température (TPL) de la source lumineuse (LS) sont cohérentes entre elles et avec chaque valeur de consigne de courant d'alimentation (LCx) de diode électroluminescente allumée, des comparaisons de la valeur de consigne de courant d'alimentation fourni à chaque diode électroluminescente allumée à des valeurs minimum et maximum (LCmx, LCMx), et si l'une des comparaisons révèle un défaut, le spectromètre est passé dans un mode de fonctionnement (OMD) dégradé (DG) ou de défaut (DF).

7. Procédé selon l'une des revendications 1 à 6, comprenant une étape de correction des mesures d'intensité lumineuse (MSxy) tenant compte d'un écart de la température (TPP) du produit à analyser et/ou de la température (TPS) du capteur (OPS) avec une température de référence, de manière à obtenir des mesures d'intensité lumineuse corrigées (MSCxy) résultant de mesures effectuées à la température de référence, les mesures corrigées formant un spectre corrigé (MSCx(1..n)).

8. Procédé selon l'une des revendications 1 à 7, comprenant des étapes d'obtention d'un spectre corrigé pour chaque diode électroluminescente (LD1-LD4), et de sommation des spectres corrigés obtenus en appliquant des coefficients de pondération, pour obtenir un spectre résultant (MR(1..n)), et éventuellement de calcul d'une moyenne de plusieurs des spectres résultants le nombre de spectres moyennés pouvant dépendre d'un mode de fonctionnement (OMD), normal ou dégradé, du spectromètre.

9. Procédé selon l'une des revendications 1 à 8, comportant une calibration du spectromètre, comprenant :

des étapes de détermination de valeurs minimum et maximum de correspondance de mesures d'intensité lumineuse (LFLz) d'un flux lumineux produit par chaque diode électroluminescente (LD1-LD4), avec des valeurs de consigne de courant d'alimentation (LC1-LC4) de chacune des diodes électroluminescentes, et/ou avec la température (TPL) de la source lumineuse, et/ou

des étapes de détermination de valeurs minimum et maximum (LCmx, LCMx) de consigne courant d'alimentation de la source lumineuse, et/ou

des étapes de détermination de valeurs minimum et maximum (ITmy, ITMy) de temps d'intégration des cellules photosensibles (y) du capteur (OPS), et/ou

des étapes réalisées en présence d'un ou plusieurs produits de référence, de détermination d'une fonction (f1) fournissant un temps d'intégration optimal (ITy) d'une cellule photosensible (y) du capteur (OPS) en fonction de mesures d'intensité lumineuse du flux lumineux produit par chaque diodes électroluminescentes, et/ou

des étapes réalisées en présence d'un ou plusieurs produits de référence, durant lesquelles on fait varier de manière indépendante la température de la source lumineuse et/ou la température (TPS) du capteur (OPS) et/ou la température (TPP) du produit de référence, on collecte des mesures d'intensité lumineuse (MSxy) fournies par le capteur, les valeurs de consigne de courant d'alimentation des diodes, des cellules du capteur, et des mesures de température, et on détermine une fonction (f2) fournissant une mesure d'intensité lumineuse corrigée (MSCxy) correspondant à une température de référence, en fonction des mesures collectées.

10. Spectromètre comprenant une source de lumière (LS) émettant un faisceau lumineux (LB) et comprenant plusieurs diodes électroluminescentes (LD1-LD4) présentant des spectres d'émission respectifs couvrant en combinaison une bande de longueur d'onde d'analyse, un capteur (OPS) comprenant des cellules photosensibles (y) disposées sur un trajet du faisceau lumineux après avoir interagi avec un produit à analyser, et un dispositif de commande (RPRC) ajustant des valeurs de consigne de courant d'alimentation (LCx) de diodes électroluminescentes (LD1-LD4) de la source lumineuse, et une durée d'intégration (ITy) des cellules photosensibles, **caractérisé en ce que** le dispositif de commande (RPRC) est configuré pour mettre en oeuvre le procédé selon l'une des revendications 1 à 9.

11. Spectromètre selon la revendication 10, configuré pour allumer une seule diode électroluminescente (LDx) de la source de lumière (LS), à la fois, et pour recueillir une mesure d'intensité lumineuse (LFLz) en mesurant un courant à une borne de chacune des diodes électroluminescentes éteinte de la source lumineuse.

12. Spectromètre selon l'une des revendications 10 et 11, dans lequel la source lumineuse (LS) est configurée pour fournir au dispositif de commande (RPRC) des tensions (Vx) et/ou des courants (Ix) d'alimentation des diodes électroluminescentes (LD1-LD4)

13. Spectromètre selon la revendication 12, dans lequel les diodes électroluminescentes (LDx) sont intégrées dans un même composant électronique (LS), éventuellement avec la photodiode (PHD) et/ou un capteur de température (TSS).

14. Spectromètre selon l'une des revendications 10 à 13, comprenant un capteur de température (TSS) fournissant des mesures de la température (TPL) de la source lumineuse (LS), et/ou un capteur de température fournissant des mesures de la température (TPS) du capteur (OPS), et/ou un capteur de température fournissant des mesures de la température (TPP) du produit à analyser.

15. Spectromètre selon l'une des revendications 10 à 14, comprenant une cellule de mesure (FLC) dans laquelle un produit à analyser interagit avec le faisceau lumineux (LB), un élément optique (CLS) pour conformer le faisceau en sortie de la source lumineuse (LS) et le transmettre à la cellule de mesure, un filtre de longueur d'onde (WFL) configuré pour étaler spatialement les différentes longueurs d'onde du faisceau lumineux en sortie de la cellule de mesure et les transmettre à différentes cellules photosensibles (y) du capteur (OPS), la source lumineuse, l'élément optique, la cellule de mesure, le filtre et le capteur étant assemblés de manière à ne former aucune zone d'air susceptible d'être traversée par le faisceau lumineux entre la source de lumière et le capteur.

**Patentansprüche**

1. Verfahren zum Steuern eines Spektrometers zum Analysieren eines Produkts, der Spektrometer umfassend eine Lichtquelle (LS), die mehrere Leuchtdioden (LD1-LD4) aufweist, die jeweilige Emissionsspektren haben, die kombiniert ein Analysewellenlängenband abdecken, **dadurch gekennzeichnet, dass** es Schritte umfasst, die darin bestehen:

einen Speisestrom (Ix) an mindestens eine der Leuchtdioden (LD1 bis LD4) zu liefern, um sie einzuschalten, und eine durch die Lichtquelle (LS) emittierte Lichtstärke (LFLz) zu messen, indem ein Strom an einer Klemme mindestens einer anderen der Leuchtdioden gemessen wird, die ausgeschaltet gehalten ist.
einen Sollwert (LCx) für den Speisestrom jeder eingeschalteten Diode abhängig von jeder Lichtstärkemessung zu ermitteln, und
den Speisestrom jeder eingeschalteten Diode zu regeln, damit er mit dem Sollwert übereinstimmt.

2. Verfahren nach Anspruch 1, umfassend Schritte des aufeinanderfolgenden Einschaltens von Gruppen von mindestens einer Leuchtdiode (LD1-LD4), wobei die Dioden einer Gruppe im Wesentlichen identische Emissionsspektren haben, während andere Leuchtdioden ausgeschaltet gehalten sind, der Messung einer Lichtstärke (LFLz) durch jede der anderen ausgeschaltet gehaltenen Leuchtdioden, und der Einstellung des Speisestromsollwerts (LCx) der eingeschalteten Diode abhängig von jeder erhaltenen Lichtstärkemessung.

3. Verfahren nach einem der Ansprüche 1 und 2, umfassend Schritte, die darin bestehen:

abhängig von den Lichtstärkemessungen (LFLz) einen Integrationsdauerwert (ITy) von lichtempfindlichen Zellen (y) eines Sensors (OPS) des Spektrometers zu ermitteln, die auf einem Weg eines durch die Lichtquelle emittierten Lichtstrahls (LB) angeordnet sind, der mit einem zu analysierenden Produkt interagiert hat, und wenn der Integrationsdauerwert und/oder der Speisestromsollwert (LCx) jeder eingeschalteten Diode (LDx) zwischen Schwellenwerten (ITmy, ITMy, ICmx, ICMx) liegt, dann an jede eingeschaltete Diode einen Speisestrom (Ix) zu liefern, der abhängig von dem Speisestromsollwert geregelt wird, die Integrationsdauer jeder lichtempfindlichen Zelle auf den ermittelten Integrationsdauerwert einzustellen, und anhand jeder Zelle des Sensors Lichtstärkemessungen (MSxy) zu erfassen, die es ermöglichen, ein Spektrum zu bilden.

4. Verfahren nach Anspruch 3, bei dem neue Werte für den Speisestromsollwert (LCx) jeder eingeschalteten Diode und/oder für die Integrationsdauer (ITy) jeder Zelle ermittelt werden und ein mit dem ermittelten Speisestromsollwert übereinstimmender Speisestrom (Ix) an jede eingeschaltete Leuchtdiode geliefert wird, bis der ermittelte Integrationsdauerwert zwischen den Schwellenwerten (ITmy, ITMy) liegt.

5. Verfahren nach einem der Ansprüche 1 und 4, bei dem der Speisestromsollwert (LCx) jeder eingeschalteten Leuchtdiode auch abhängig von einer durch eine Photodiode (PHD) der Lichtquelle (LS) gelieferten Lichtstärkemessung (LFL0) und/oder von einer Messung der Temperatur (TPL) der Lichtquelle (LS) und/oder von einer Messung der Stromstärke (Ix) oder der Versorgungsspannung (Vx) jeder eingeschalteten Diode eingestellt wird.

6. Verfahren nach einem der Ansprüche 1 bis 5, umfassend Schritte der Selbstdiagnoseprüfung umfassend mindestens einen der folgenden Vergleiche:

Vergleiche um zu ermitteln, ob die Lichtstärkemessungen (LFLz) und/oder Messungen (Ix, Vx) des an die eingeschaltete Diode (LDx) gelieferten Speisestroms und/oder Messungen der Temperatur (TPL) der Lichtquelle (LS) miteinander und mit jedem Speisestromsollwert (LCx) einer eingeschalteten Leuchtdiode kohärent sind, Vergleiche zwischen dem Sollwert des an jede eingeschaltete Leuchtdiode gelieferten Speisestroms und Mindest- und
Höchstwerten (LCmx, LCMx), und wenn einer der Vergleiche einen Fehler zeigt, dann wird das Spektrometer in einen Notlauf- (DG) oder Fehler- (DF) Betriebsmodus (OMD) geschaltet.

7. Verfahren nach einem der Ansprüche 1 bis 6, umfassend einen Schritt der Korrektion der Lichtstärkemessungen (MSxy), bei dem eine Differenz zwischen der Temperatur (TPP) des zu analysierenden Produkts und/oder zwischen der Temperatur (TPS) des Sensors (OPS) und einer Referenztemperatur so berücksichtigt wird, dass korrigierte Lichtstärkemessungen (MSCxy) erhalten werden, die aus Messungen resultieren, die bei der Referenztemperatur durchgeführt werden, wobei die korrigierten Messungen ein korrigiertes Spektrum (MSCx(1..n)) bilden.

8. Verfahren nach einem der Ansprüche 1 bis 7, umfassend Schritte des Erhaltens eines korrigierten Spektrums für jede Leuchtdiode (LD1-LD4), und der Summation der erhaltenen korrigierten Spektren unter Anwendung von Bewertungskoeffizienten, um ein resultierendes Spektrum (MR(1..n)) zu erhalten, und eventuell der Berechnung einer Durchschnitt von mehreren der resultierenden Spektren, wobei die Anzahl von gemittelten Spektren von einem Normal- oder Notlaufbetriebsmodus (OMD) des Spektrometers abhängen kann.

9. Verfahren nach einem der Ansprüche 1 bis 8, das eine Kalibrierung des Spektrometers aufweist, umfassend:

Schritte der Ermittlung von Mindest- und Höchstwerten für die Übereinstimmung von Lichtstärkemessungen (LFLz) eines von jeder Leuchtdiode (LD1-LD4) erzeugten Lichtflusses mit Speisestromsollwerten (LC1-LC4) jeder einzelnen Leuchtdiode und/oder mit der Temperatur (TPL) der Lichtquelle, und/oder
Schritte der Ermittlung von Mindest- und Höchstwerten (LCmx, LCMx) für den Speisestromsollwert der Lichtquelle, und/oder
Schritte der Ermittlung von Mindest- und Höchstwerten (ITmy, ITMy) für die Integrationszeit der lichtempfindlichen Zellen (y) des Sensors (OPS), und/oder
in Gegenwart eines oder mehrerer Referenzprodukte durchgeführte Schritte der Ermittlung einer Funktion (f1), die eine optimale Integrationszeit (ITy) einer lichtempfindlichen Zelle (y) des Sensors (OPS) abhängig von Lichtstärkemessungen des von jeder Leuchtdiode erzeugten Lichtflusses liefert, und/oder
in Gegenwart eines oder mehrerer Referenzprodukte durchgeführte Schritte, bei denen die Temperatur der Lichtquelle und/oder die Temperatur (TPS) des Sensors (OPS) und/oder die Temperatur (TPP) des Referenzprodukts unabhängig variiert wird/werden, durch den Sensor gelieferte Lichtstärkemessungen (MSxy), die Speisestromsollwerte der Dioden, die Integrationsdauerwerte der Zellen des Sensors und Temperaturmessungen gesammelt werden, und eine Funktion (f2), die eine korrigierte mit einer Referenztemperatur übereinstimmende Lichtstärkemessung (MSCxy) liefert, abhängig von den gesammelten Messungen ermittelt wird.

10. Spektrometer umfassend eine einen Lichtstrahl (LB) emittierende Lichtquelle (LS) und mehrere Leuchtdioden (LD1-LD4), die jeweilige Emissionsspektren aufweisen, die kombiniert ein Analysewellenlängenband abdecken, einen Sensor (OPS) umfassend lichtempfindliche Zellen (y), die auf einem Weg des Lichtstrahls angeordnet sind, nachdem er mit einem zu analysierenden Produkt interagiert hat, und eine Steuervorrichtung (RPRC), die Speisestromsollwerte (LCx) von Leuchtdioden (LD1-LD4) der Lichtquelle und eine Integrationsdauer (ITy) der lichtempfindlichen Zellen einstellt,
   **dadurch gekennzeichnet, dass** die Steuervorrichtung (RPRC) konfiguriert ist, um das Verfahren nach einem der Ansprüche 1 bis 9 auszuführen.

11. Spektrometer nach Anspruch 10, das konfiguriert ist, um eine einzelne Leuchtdiode (LDx) der Lichtquelle (LS) einzuschalten und um eine Lichtstärkemessung (LFLz) zu erfassen, indem ein Strom an einer Klemme jeder einzelnen ausgeschalteten Leuchtdiode der Lichtquelle gemessen wird.

12. Spektrometer nach einem der Ansprüche 10 und 11, bei dem die Lichtquelle (LS) konfiguriert ist, um Versorgungsspannungen (Vx) und/oder Speiseströme (Ix) für die Leuchtdioden (LD1-LD4) an die Steuervorrichtung (RPRC) zu liefern.

13. Spektrometer nach Anspruch 12, bei dem die Leuchtdioden (LDx) in einem selben elektronischen Bauelement (LS) integriert sind, eventuell mit der Photodiode (PHD) und/oder einem Temperatursensor (TSS).

14. Spektrometer nach einem der Ansprüche 10 bis 13, umfassend einen Temperatursensor (TSS), der Messungen der Temperatur (TPL) der Lichtquelle (LS) liefert, und/oder einen Temperatursensor, der Messungen der Temperatur (TPS) des Sensors (OPS) liefert, und/oder einen Temperatursensor, der Messungen der Temperatur (TPP) des zu analysierenden Produkts liefert.

15. Spektrometer nach einem der Ansprüche 10 bis 14, umfassend eine Messzelle (FLC), in der ein zu analysierendes Produkt mit dem Lichtstrahl (LB) interagiert, ein optisches Element (CLS) zum Formen des Strahls am Ausgang der Lichtquelle (LS) und zum Weiterleiten desselben an die Messzelle, ein Wellenlängenfilter (WFL), das konfiguriert ist, um die verschiedenen Wellenlängen des Lichtstrahls am Ausgang der Messzelle räumlich zu spreizen und sie an verschiedene lichtempfindliche Zellen (y) des Sensors (OPS) weiterzuleiten, wobei die Lichtquelle, das optische Element, die Messzelle, das Filter und der Sensor so zusammengebaut sind, dass sie keinen Luftbereich bilden, der vom Lichtstrahl zwischen der Lichtquelle und dem Sensor durchströmbar ist.

## Claims

1. A method for controlling a spectrometer for analyzing a product, the spectrometer comprising a light source (LS) comprising several light-emitting diodes (LD1-LD4) having respective emission spectra covering in combination an analysis wavelength band,
   **characterized in that** it comprises steps of:

   supplying at least one of the light-emitting diodes (LD1 to LD4) with a supply current (Ix) to switch it on, and measuring a light intensity (LFLz) emitted by the light source (LS) by measuring a current at a terminal of at least another of the light-emitting diodes maintained off,
   determining, according to each light intensity measurement, a setpoint value (LCx) of the supply current of each diode that is on, and
   regulating the supply current of each diode that is on so that it corresponds to the setpoint value.

2. Method according to claim 1, comprising steps of successively switching on groups of at least one light-emitting diode (LD1-LD4), the diodes of a group having substantially identical emission spectra, while other light-emitting diodes are maintained off, of measuring a light intensity (LFLz) by each of the other light-emitting diodes maintained off, and of adjusting, according to each light intensity measurement obtained, the supply current setpoint value (LCx) of the diode that is on.

3. Method according to one of claims 1 and 2, comprising steps of:

determining according to the light intensity measurements (LFLz) an integration time value (ITy) of light-sensitive cells (y) of a sensor (OPS) of the spectrometer, disposed on a route of a light beam (LB) emitted by the light source and having interacted with a product to be analyzed, and
if the integration time value and/or the supply current setpoint value (LCx) of each diode that is on (LDx) is between threshold values (ITmy, ITMy, ICmx, ICMx), supplying each diode that is on with a supply current (Ix) regulated according to the value of the setpoint supply current, adjusting the integration time of each light-sensitive cell to the determined integration time value, and acquiring, by means of each cell of the sensor, light intensity measurements (MSxy) enabling a spectrum to be formed.

4. Method according to claim 3, wherein new supply current setpoint values (LCx) of each diode that is on and/or of integration time (ITy) of each cell are determined and a supply current (Ix) corresponding to the determined supply current setpoint value is supplied to each light-emitting diode that is on, as long as the determined integration time value is not between the threshold values (ITmy, ITMy).

5. Method according to one of claims 1 to 4, wherein the supply current setpoint (LCx) of each light-emitting diode that is on is also adjusted according to a light intensity measurement (LFL0) supplied by a photodiode (PHD) of the light source (LS), and/or to a measurement of the temperature (TPL) of the light source (LS), and/or a measurement of supply current intensity (Ix) or voltage (Vx) of each diode that is on.

6. Method according to one of claims 1 to 5, comprising self-diagnosis test steps comprising at least one of the following comparisons: comparisons to determine whether the measurements of light intensity (LFLz), and/or measurements (Ix, Vx) of the supply current supplied to the diode that is on (LDx), and/or measurements of temperature (TPL) of the light source (LS) are consistent with each other and with each supply current setpoint value (LCx) of light-emitting diode that is on, comparisons of the setpoint value of the supply current supplied to each light-emitting diode that is on with minimum and maximum values (LCmx, LCMx), and if one of the comparisons reveals a defect, the spectrometer is switched to a degraded (DG) or default (DF) operating mode (OMD).

7. Method according to one of claims 1 to 6, comprising a step of correcting the light intensity measurements (MSxy) taking account of a difference between the temperature (TPP) of the product to be analyzed and/or the temperature (TPS) of the sensor (OPS) and a reference temperature, so as to obtain corrected light intensity measurements (MSCxy) resulting from measurements taken at the reference temperature, the corrected measurements forming a corrected spectrum (MSCx(1..n)).

8. Method according to one of claims 1 to 7, comprising steps of obtaining a corrected spectrum for each light-emitting diode (LD1-LD4), and of summing the corrected spectra obtained by applying weighting factors, to obtain a resulting spectrum (MR(1..n)), and possibly of calculating an average of several of the resulting spectra, the number of averaged spectra possibly depending on an operating mode (OMD), either normal or degraded, of the spectrometer.

9. Method according to one of claims 1 to 8, comprising a calibration of the spectrometer, comprising:

steps of determining minimum and maximum match values for matching light intensity measurements (LFLz) of a light flow produced by each light-emitting diode (LD1-LD4), with setpoint values of the supply current (LC1-LC4) of each of the light-emitting diodes, and/or with the temperature (TPL) of the light source, and/or
steps of determining minimum and maximum setpoint values of the supply current (LCmx, LCMx) of the light source, and/or
steps of determining minimum and maximum values (ITmy, ITMy) of integration time of the light-sensitive cells (y) of the sensor (OPS), and/or
steps performed in the presence of one or more reference products, of determining a function (f1) supplying an optimal integration time (ITy) of a light-sensitive cell (y) of the sensor (OPS) according to light intensity measurements of the light flow produced by each light-emitting diode, and/or
steps performed in the presence of one or more reference products, during which the temperature of the light source and/or the temperature (TPS) of the sensor (OPS) and/or the temperature (TPP) of the reference product is caused to vary independently, light intensity measurements (MSxy) supplied by the sensor, the setpoint values of the supply current of the diodes, and temperature measurements are collected, and a function (f2) supplying a corrected light intensity measurement (MSCxy) corresponding to a reference temperature is determined, according to the measurements collected.

**10.** A spectrometer comprising a light source (LS) emitting a light beam (LB) and comprising several light-emitting diodes (LD1-LD4) having respective emission spectra covering in combination an analysis wavelength band, a sensor (OPS) comprising light-sensitive cells (y) disposed on a route of the light beam after it has interacted with a product to be analyzed, and a control device (RPRC) adjusting setpoint values of supply current (LCx) of light-emitting diodes (LD1-LD4) of the light source, and an integration time (ITy) of the light-sensitive cells,
**characterized in that** the control device (RPRC) is configured to implement the method according to one of claims 1 to 9.

**11.** Spectrometer according to claim 10, configured to switch on only one light-emitting diode (LDx) of the light source (LS) at a time, and to collect a light intensity measurement (LFLz) by measuring a current at a terminal of each of the light-emitting diodes of the light source that are off.

**12.** Spectrometer according to one of claims 10 and 11, wherein the light source (LS) is configured to supply the control device (RPRC) with voltages (Vx) and/or currents (Ix) for supplying the light-emitting diodes (LD1-LD4).

**13.** Spectrometer according to claim 12, wherein the light-emitting diodes (LDx) are integrated into a same electronic component (LS), possibly with the photodiode (PHD) and/or a temperature sensor (TSS).

**14.** Spectrometer according to one of claims 10 to 13, comprising a temperature sensor (TSS) supplying measurements of the temperature (TPL) of the light source (LS), and/or a temperature sensor supplying measurements of the temperature (TPS) of the sensor (OPS), and/or a temperature sensor supplying measurements of the temperature (TPP) of the product to be analyzed.

**15.** Spectrometer according to one of claims 10 to 14, comprising a measurement cell (FLC) wherein a product to be analyzed interacts with the light beam (LB), an optical element (CLS) to shape the beam at output of the light source (LS) and transmit it to the measurement cell, a wavelength filter (WFL) configured to spatially spread the different wavelengths of the light beam at output of the measurement cell and transmit them to different light-sensitive cells (y) of the sensor (OPS), the light source, the optical element, the measurement cell, the filter and the sensor being assembled so as not to form any air zone susceptible of being passed through by the light beam between the light source and the sensor.

Fig. 1

Fig. 2

Fig. 3A

Fig. 3B

Fig. 4

Fig. 5

EP 2 929 322 B1

Fig. 6

S1 — LCx→LDx

S2 — Acq. LFLz

S3 — Acq. TPL

S4 — Comp. LFLz / LCx

S5 — Comp. LFLz / TPL

S18 — OMD = DF ← Y — S6 — Def. & OMD = DG?

N

S7 — ITy=f1(LFLz,y)

S8 — ITmy<ITy<ITMy — N →

Y

S15 — ITy→OPS(y)

S16 — Acq. MSxy,TP

S17 — MSCxy=f2(MSxy,TP,y)

MSCx(1..n)

S14 — OMD = DG

Y

S13 — OMD = NL? — N — OMD = DF — S18

N

S12 — LCmx<LCx<LCMx

Y

S10 — LCx=LCx−STP

Y

S9 — ITy<ITmy — S11

N

LCx=LCx+STP

Fig. 7

LCx

D3
D1
3a
2a
1
D2
2b
D4
3b

O

LFLz/TPL

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2940447

**Littérature non-brevet citée dans la description**

- LED lighting Life Prediction. **DE JIANZHONG JIAO.** Ph.D., Director of Regulations & Emerging Technologies. Osram Opto Semiconductors, Inc, Octobre 2009
- **ZENG-PING CHEN ; JULIAN MORRIS ; ANTONIA BORISSOVA ; SHAHID KHAN ; TARIQ MAHMUD ; RADO PENCHEV ; KEVIN J. ROBERTS.** On-line monitoring of batch cooling crystallization of organic compounds using ATR-FTIR spectroscopy coupled with an advanced calibration method. *Chemometrics and Intelligent Laboratory Systems,* 2009, vol. 96, 49-58
- **K. J. REYNOLDS ; B.A., M.SC. ; J. P. DE KOCK ; B.A., L. TARASSENKO ; M.A., D.PHIL. ; C.EKG. ; M.I.E.E. ; J. T. B. MOYLE ; M.B., B.S., I.ENG. ; M.RNST.M.C.** Temperature Dependence Of LED and its Theoretical Effect on Pulse Oximetry. *British Journal of Anaesthesia,* 1991, vol. 67 (5), 638-643